(19) Europäisches Patentamt
European Patent Office
Office européen des brevets

(11) Veröffentlichungsnummer : **0 045 276**
**B1**

(12) # EUROPÄISCHE PATENTSCHRIFT

(45) Veröffentlichungstag der Patentschrift : **22.06.83**

(51) Int. Cl.³ : **C 09 B 45/14**// D06P1/10, D06P3/04

(21) Anmeldenummer : **81810278.2**

(22) Anmeldetag : **10.07.81**

(54) **1:2-Chrom- und Kobaltkomplexfarbstoffe.**

(30) Priorität : **16.07.80 CH 5456/80**

(43) Veröffentlichungstag der Anmeldung : **03.02.82 Patentblatt 82/05**

(45) Bekanntmachung des Hinweises auf die Patenterteilung : **22.06.83 Patentblatt 83/25**

(84) Benannte Vertragsstaaten : **BE CH DE FR GB IT LI**

(56) Entgegenhaltungen :
**BE A 633 094**
**US A 2 499 133**
**US A 2 610 175**
**US A 2 813 853**

(73) Patentinhaber : **CIBA-GEIGY AG**
**Patentabteilung Postfach**
**CH-4002 Basel (CH)**

(72) Erfinder : **Beffa, Fabio, Dr.**
**Burgstrasse 38**
**CH-4125 Riehen (CH)**

**EP 0 045 276 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

# 1 : 2-Chrom- und Kobaltkomplexfarbstoffe

Gegenstand der vorliegenden Erfindung sind 1 : 2-Metallkomplexfarbstoffe der Formel I

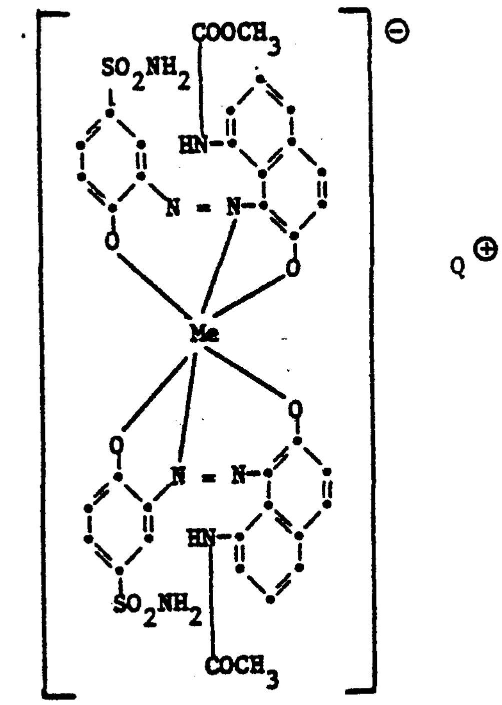

(I)

worin Me Chrom oder Kobalt und Q$^{\oplus}$ ein Kation bedeuten, und deren Mischungen mit den Metallkomplexfarbstoffen der Formeln II und III

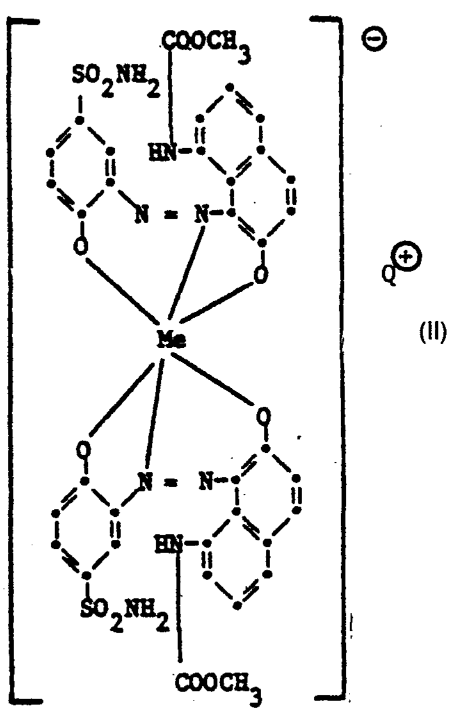

(II)

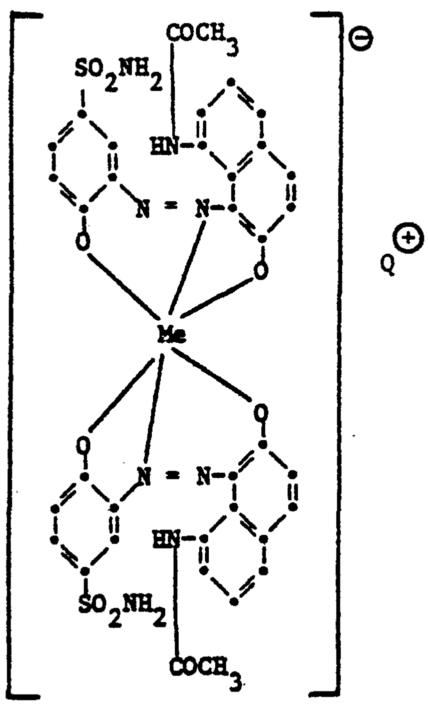

(III)

worin Me und Q$^{\oplus}$ die oben angegebenen Bedeutungen aufweisen. Q$^{\oplus}$ bedeutet ein Alkali-, vor allem Natrium- oder Lithiumkation oder auch ein Ammoniumion oder das Kation eines organischen Amins, wie z. B. Triäthanolamins.

Die symmetrischen 1 : 2-Chromkomplexe gemäss den obenstehenden Formeln II und III sind aus den US-Patentschriften 2,499,133 und 2,623,871 bekannt. Die 1 : 2-Chrom- oder Kobaltkomplexfarbstoffe der

Formel II gelieren in den üblichen Klotzflotten oder Druckpasten, so dass die Klotzflotten oder Druckpasten meistens unbrauchbar sind. Der 1 : 2-Chromkomplexfarbstoff der Formel III zeigt nicht bei allen Nassechtheiten befriedigende Ergebnisse.

Der vorliegenden Erfindung lag die Aufgabe zugrunde, ähnliche Farbstoffe zu entwickeln, welche diese Nachteile nicht aufweisen.

Diese Aufgabe wird durch die erfindungsgemässen Farbstoffe bzw. Farbstoffmischungen gelöst. Ueberraschenderweise gelieren Klotzflotten oder Druckpasten mit dem 1 : 2-Chromkomplexfarbstoff der Formel I bzw. Mischungen der 1 : 2-Chrom- oder Kobaltkomplexfarbstoffe der Formel I, II und III nicht und die Nassechtheiten sind besser, als bei dem 1 : 2-Chromkomplexfarbstoff der Formel III.

Unter den Metallkomplexfarbstoffen der Formel I und deren Mischungen mit den Metallkomplexfarbstoffen der Formeln II und III sind die Chromkomplexfarbstoffe bevorzugt.

Die Gemische der Metallkomplexfarbstoffe der Formeln I, II und III werden z. B. hergestellt, indem man ein Gemisch der Azofarbstoffe der Formeln IV und V

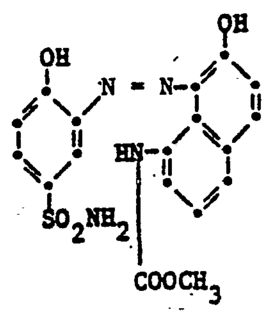

(IV)

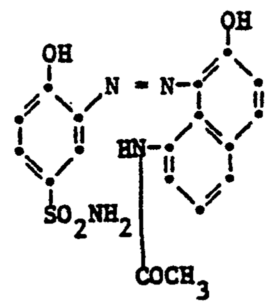

(V)

mit einem kobalt- oder vorzugsweise chromabgebenden Mittel umsetzt. Dazu werden die Azofarbstoffe der Formeln IV und V in Wasser, einem organischen Lösungsmittel oder einem Gemisch aus Wasser und einem organischen Lösungsmittel suspendiert, ein chrom- oder kobaltabgebendes Mittel zugesetzt, die Mischung vorzugsweise bei 80 bis 100 °C verrührt und ein pH-Wert zwischen 6 und 9 eingestellt.

Durch geeignete Wahl des Mengenverhältnisses der zur Metallisierung eingesetzten Farbstoffe der Formeln IV und V lässt sich die Zusammensetzung der Mischung variieren. Vorzugsweise setzt man die beiden Farbstoffe im Molverhältnis 35 : 65 bis 65 : 35, insbesondere 45 : 55 bis 55 : 45 ein.

Der reine asymmetrische Chromkomplexfarbstoff, welcher der Formel VI

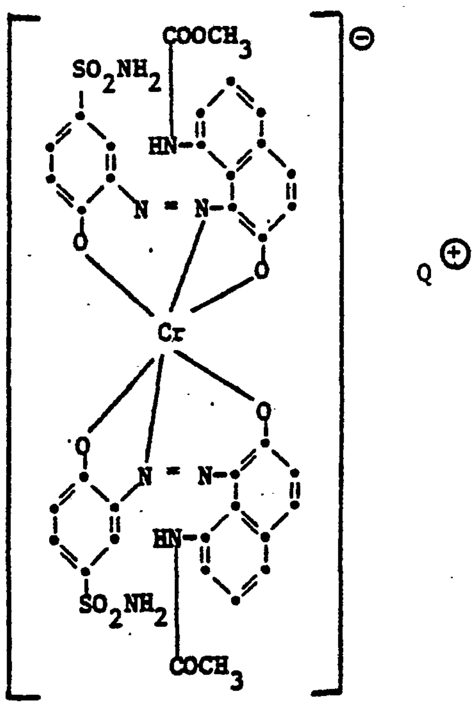

(VI)

entspricht, worin $Q^{\oplus}$ ein Kation ist, wird erhalten, indem man zuerst den 1 : 1-Chromkomplexfarbstoff des Farbstoffes der Formel IV

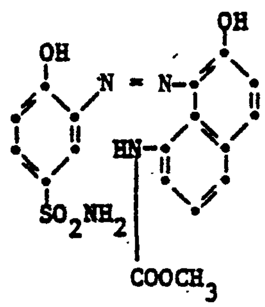

(IV)

oder den 1 : 1-Chromkomplexfarbstoff des Farbstoffs der Formel V

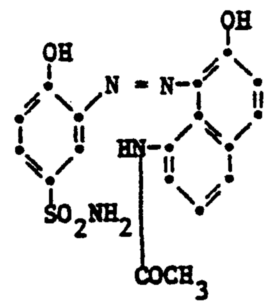

(V)

herstellt und diesen anschliessend mit dem Farbstoff der Formel V oder IV zum 1 : 2-Chromkomplexfarbstoff der Formel VI umsetzt. Dieser stellt eine bevorzugte Form der erfindungsgemässen Farbstoffe dar. Dazu wird der 1 : 1-Chromkomplexfarbstoff des Farbstoffes der Formel IV oder V in Wasser, einem organischen Lösungsmittel oder einem Gemisch aus Wasser und einem organischen Lösungsmittel suspendiert, der Farbstoff der Formel V oder IV zugesetzt, die Mischung bei einer Temperatur zwischen 80 und 100 °C verrührt, ein pH-Wert zwischen 6 und 9 eingestellt und anschliessend der 1 : 2-Chromkomplexfarbstoff der Formel VI aus der Reaktionslösung isoliert.

Die Metallisierung wird nach den üblichen Verfahren durchgeführt, z. B. mit Kobaltsulfat oder -acetat oder mit Natriumchromsalicylat in neutraler oder schwach alkalischer Lösung. Im Falle der Farbstoffe der Formel VI wird vorzugsweise zuerst in saurer Lösung der 1 : 1-Chromkomplex der Azoverbindung der Formel IV oder V hergestellt, und dieser anschliessend in neutralem bis schwach alkalischem Medium mit der Azoverbindung der Formel V oder IV umgesetzt.

Als organische Lösungsmittel eignen sich z. B. Ketone, wie z. B. Methylisobutylketon, oder Alkohole, wie z. B. Glykol oder Butanol.

Die nach dem obigen Verfahren erhältlichen neuen Metallkomplexfarbstoffe werden in Form ihrer Salze, insbesondere Alkali-, vor allem Natrium- oder Lithiumsalze, oder auch Ammoniumsalze oder Salze von organischen Aminen mit positiv geladenem Stickstoffatom isoliert und eignen sich zum Färben und Bedrucken verschiedener Stoffe, vor allem aber zum Färben stickstoffhaltiger Materialien, wie Seide, Leder und insbesondere Wolle, sowie auch für synthetische Fasern aus Polyamiden oder Polyurethanen. Sie sind vor allem zum Färben aus schwach alkalischem, neutralem oder schwach saurem, z. B. essigsaurem Bade geeignet. Die so erhaltenen Färbungen sind gleichmässig und haben eine gute Licht-, Wasch-, Wasser-, Heisswasser-, Walk-, Dekatur- und Carbonisierechtheit.

Falls man braune Farbstoffe mit gelbstichiger Nuance herstellen will, so gibt man bei der Mischchromierung bzw. -kobaltierung der obengenannten Farbstoffe der Formeln IV und V bis zu 65 Molprozent des Azofarbstoffes der Formel VII

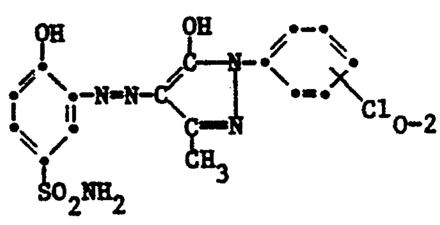

(VII)

hinzu.

Die erfindungsgemässen 1 : 2-Chromkomplexfarbstoffe der Formel I und die Mischungen der 1 : 2-Chrom- oder -Kobaltkomplexfarbstoffe der Formeln I, II und III bieten insbesondere Vorteile bei der Verwendung in wässrigen Klotzflotten oder Druckpasten, da keine Probleme infolge Gelierens auftreten.

Die Klotzflotten oder Druckpasten enthalten in der Regel weitere Zusätze, beispielsweise Netzmittel, Antischaummittel oder die Eigenschaften des Textilmaterials beeinflussende Mittel, wie z. B. Weichmachungsmittel, Zusätze zum Flammfestausrüsten oder schmutz-, wasser- und ölabweisende Mittel, vor

allem aber natürliche oder synthetische Verdicker.

Geeignete natürliche Verdickungsmittel sind beispielsweise Kernmehläther, Stärkeäther, Alginate, Stärke, Tragant, Carboxymethylcellulose und Celluloseäther. Als synthetische Verdickungsmittel kommen beispielsweise hochmolekulare Mono- oder Copolymerisate von Acrylsäure, Methacrylsäure, Maleinsäure mit äthylenisch ungesättigten Comonomeren wie Aethylen, Butadien, Hydroxyalkylacrylate, Divinyldioxan und Divinylbenzol, in Form von wasserlöslichen Alkali-, Ammonium- oder Amin-Salzen, in Frage.

Das Klotzfärben oder Bedrucken erfolgt nach den üblichen Methoden.

In den nachfolgenden Beispielen bedeuten die Teile, sofern nichts anderes angegeben wird, Gewichtsteile, die Prozente Gewichtsprozente, und die Temperaturen sind in Celsiusgraden angegeben.

Beispiel 1

20.8 Teile des Farbstoffes der Formel IV

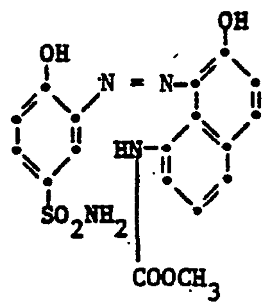

und 20 Teile des Farbstoffes der Formel V

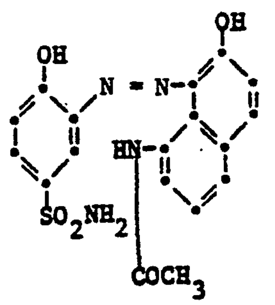

werden in 800 Volumenteilen Wasser mit 156 Volumenteilen einer Lösung von chromsalicylsaurem Natrium (entsprechend 3,25 Teilen Chrom) solange am Rückflusskühler erhitzt bis die Ausgangsfarbstoffe verschwunden sind. Dabei bildet sich eine dunkelblaugraue Lösung, aus der die Mischung der chromhaltigen Farbstoffe durch Zugabe von Natriumchlorid ausgefällt wird. Nach Filtrieren und Trocknen stellt sie ein blauschwarzes Pulver dar, das in heissem Wasser löslich ist und Wolle aus neutralem bis schwach saurem Färbebade in grauen Tönen von guten Echtheiten färbt.

Ersetzt man im obigen Beispiel die 20.8 Teile des Farbstoffes der Formel IV und die 20 Teile des Farbstoffes der Formel V durch die in der Tabelle angegebenen Teile, so erhält man graue Farbstoffmischungen mit ähnlichen Eigenschaften.

| No. | Farbstoff der Formel IV | Farbstoff der Formel V |
|---|---|---|
| 1 | 16.6 Teile | 24 Teile |
| 2 | 18.7 Teile | 22 Teile |
| 3 | 22.9 Teile | 18 Teile |
| 4 | 24.9 Teile | 16 Teile |

Beispiel 2

20.8 Teile des Farbstoffes der Formel IV und 20 Teile des Farbstoffes der Formel V werden in 800

Volumenteilen Wasser mit 14.8 Teilen Kobaltsulfatheptahydrat, entsprechend 3,1 Teilen Kobalt so lange bei 90-95° verrührt, bis kein Ausgangsfarbstoff mehr nachweisbar ist. Dabei sorgt man durch Zugabe von ca. 5 N Natronlauge dafür, dass der pH-Wert des Reaktionsgemisches ca. 7 beträgt. Die Mischung der kobalthaltigen Farbstoffe wird hierauf durch Zugabe von Natriumchlorid-Lösung ausgefällt. Nach Filtrieren und Trocknen stellt sie ein dunkles Pulver dar, das Wolle aus neutralem bis schwach saurem Bade in sehr echten Korinthtönen färbt.

Ersetzt man im obigen Beispiel die 20.8 Teile des Farbstoffes der Formel IV durch 22.9 Teile dieses Farbstoffes und die 20 Teile des Farbstoffes der Formel V durch 18 Teile desselben Farbstoffes, so erhält man eine Farbstoffmischung von ähnlichen färberischen Eigenschaften.

Beispiel 3

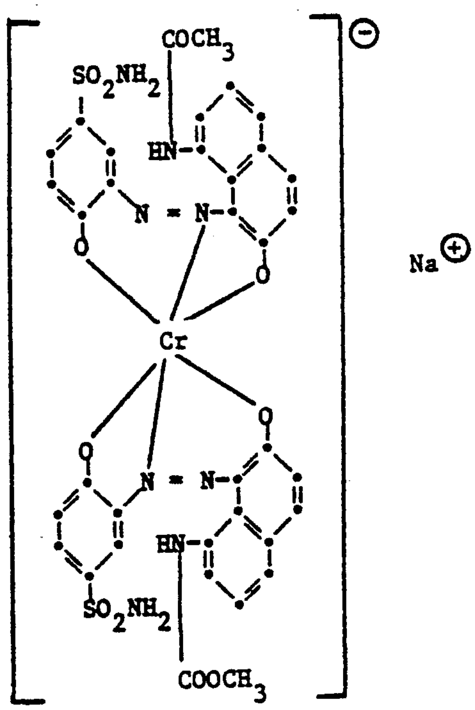

In 250 Volumenteilen Aethylenglykol suspendiert man 23.3 Teile der komplexen Chromverbindung vom Typus 1 Atom Chrom : 1 Molekül Farbstoff, welche 2.6 Teile Chrom und 20.8 Teile Monoazofarbstoff der Formel IV (erhalten nach an sich bekannten Methoden, z. B. durch Chromieren des Monoazofarbstoffes in Butanol mit Chromchloridhexahydrat) entspricht, mit 20 Teilen des Monoazofarbstoffes der Formel V. Man erhitzt das Gemisch auf 80-85° und erhöht gleichzeitig den pH-Wert der Suspension auf 7 bis 7.5 durch Zugabe von 5 n Natronlauge und hält es so lange bei dieser Temperatur und konstantem pH-Wert durch weitere Zugabe von 5 N Natronlauge, bis die Ausgangsprodukte verschwunden sind. Der neue, chromhaltige Farbstoff wird hierauf durch Zugabe von Natriumchloridlösung ausgefällt; man filtriert ihn ab und trocknet ihn. Nach dem Trocknen stellt er ein dunkles Pulver dar, das sich in Wasser mit grauer Farbe löst und Wolle in grauen, echten Tönen färbt.

Beispiel 4

10.4 Teile des Farbstoffes der Formel IV

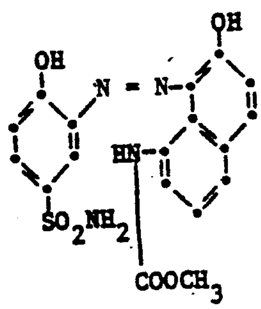

(IV)

und 10 Teile des Farbstoffes der Formel V

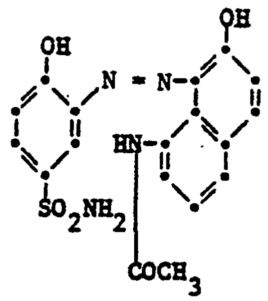

(V)

sowie 20.5 Teile des Farbstoffes der Formel VIII

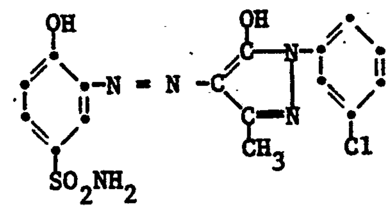

(VIII)

erhalten aus diazotiertem 2-Amino-1-hydroxybenzol-4-sulfonsäureamid und 1-(3′-Chlorphenyl)-3-methyl-5-pyrazolon werden in 350 Volumenteilen Aethylenglykol suspendiert. Man erhitzt das Gemisch auf 80 bis 85°, gibt hierauf 14,8 Teile Kobaltsulfatheptahydrat, entsprechend 3,1 Teilen Kobalt hinzu und rührt so lange bei 80 bis 85 °C bis keine Ausgangsfarbstoffe mehr nachweisbar sind. Dabei sorgt man durch Zugabe von 5 N Natronlauge dafür, dass der pH-Wert des Reaktionsgemisches ca. 8 beträgt. Die Mischung der kobalthaltigen Farbstoffe wird hierauf durch Zugabe von Natriumchloridlösung ausgefällt. Nach Filtrieren und Trocknen erhält man ein dunkles Pulver, das Wolle aus neutralem bis schwach saurem Bad in sehr echten braunen Tönen färbt.

Ersetzt man im obigen Beispiel die 20.5 Teile des Pyrazolonfarbstoffes der Formel VIII durch 18.7 Teile des Farbstoffes aus diazotiertem 2-Amino-1-hydroxybenzol-4-sulfonsäureamid und 1-Phenyl-3-methyl-5-pyrazolon, so erhält man eine Farbstoffmischung mit ähnlich guten Eigenschaften.

Chromiert man die oben beschriebenen Farbstoffmischungen nach an sich bekannten Methoden, z. B. mit einer wässrigen Lösung von chromsalicylsaurem Natrium am Rückfluss, so erhält man ebenfalls braune Farbstoffe mit guten Echtheiten.

## Beispiel 5

Man bereitet eine Druckpaste folgender Zusammensetzung :

| | |
|---|---|
| 30 g | Farbstoffmischung des Beispiels 1 |
| 50 g | Thiodiglykol |
| 260 g | Wasser kochend |
| 100 g | Harnstoff |
| 500 g | Verdickerlösung auf der Basis von Johannisbrotkernmehl |
| 60 g | Ammontartrat 15° Bé |
| 1 000 g | |

Die so erhältene Druckpaste ist in Bezug auf ihre Konsistenz für den Druck sehr gut geeignet und behält ihre guten Eigenschaften auch nach dem Stehen über mehrere Tage bei ; sie geliert nicht.

Mit dieser Druckpaste wird ein Gewebe aus Wolle oder Polyamid bedruckt und während 20-30 Minuten bei 0,2 bar (102-104°) gedämpft. Das so erhaltene, grau-bedruckte Material besitzt gute Echtheitseigenschaften, vor allem Nassechtheiten.

Ersetzt man in der oben beschriebenen Druckpaste die Farbstoffmischung des Beispiels 1 durch die gleiche Menge des symmetrischen 1 : 2-Chromkomplexes des Farbstoffes der Formel IV, so erhält man eine Druckpaste, die sehr stark geliert und daher für den Druck nicht mehr brauchbar ist.

## Beispiel 6

Man löst 2 Teile der Farbstoffmischung gemäss Beispiel 1 in 4 000 Teilen Wasser, geht mit 100 Teilen

Wolle bei 50° ein, setzt 3 Teile Ammoniumacetat zu, erhitzt innerhalb von 45 Minuten zum Kochen und hält bei dieser Temperatur unter gutem Umziehen der Wolle während 1 1/2 Stunden, spült und trocknet. Die so in grauen Tönen gefärbte Wolle zeichnet sich durch gute Echtheiten aus.

**Ansprüche**

1. 1 : 2-Metallkomplexfarbstoffe der Formel I

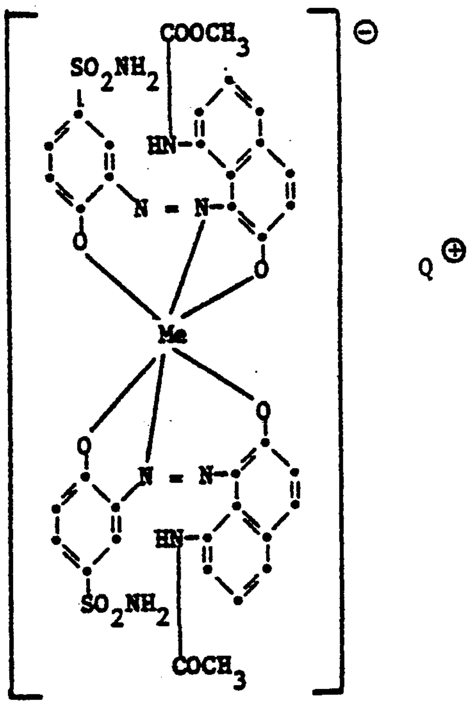

(I)

worin Me Chrom oder Kobalt und $Q^{\oplus}$ ein Kation bedeutet und deren Mischungen mit den Metallkomplexfarbstoffen der Formeln II und III

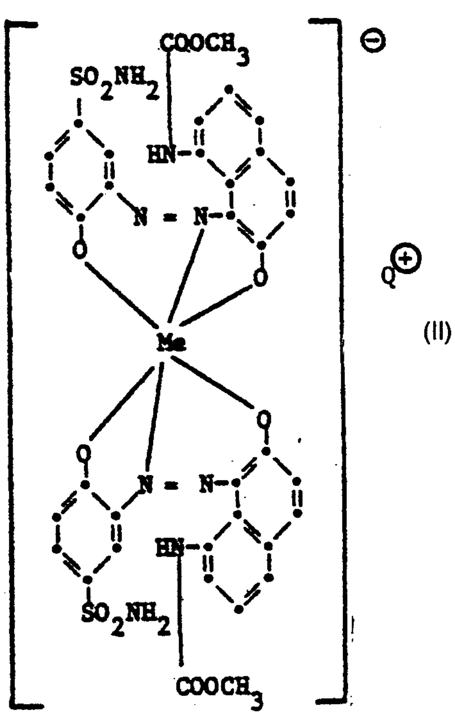

(II)

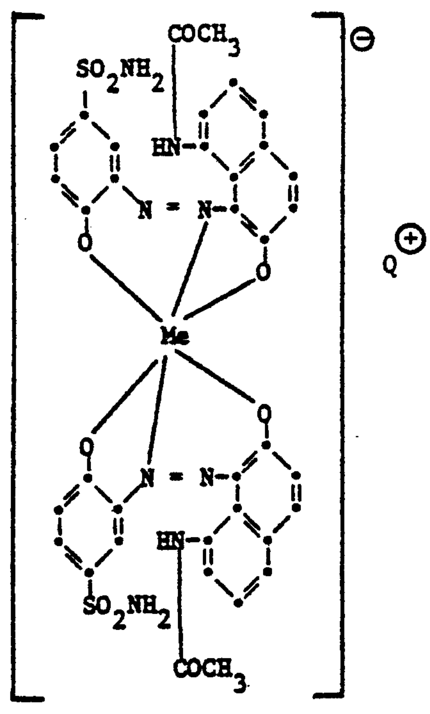

(III)

worin Me und $Q^{\oplus}$ die oben angegebenen Bedeutungen aufweisen.

2. Metallkomplexfarbstoffe der Formel I oder deren Mischungen mit den Metallkomplexfarbstoffen

der Formeln II und III, worin Me Chrom bedeutet.

3. 1 : 2-Chromkomplexfarbstoffe der Formel VI

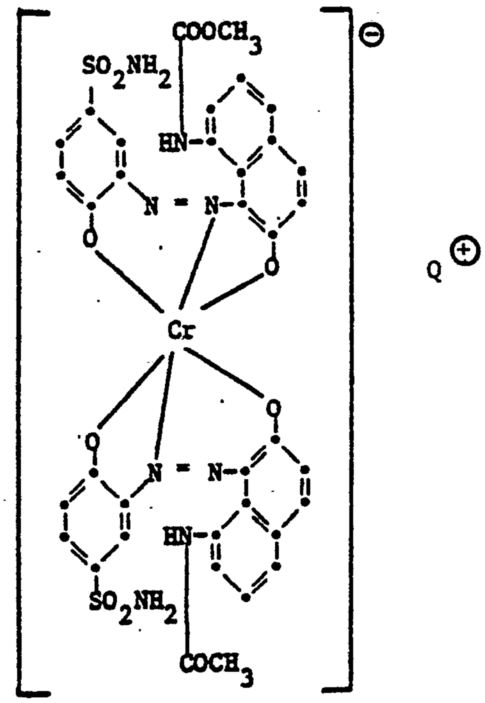

(VI)

worin Q⊕ ein Kation bedeutet.

4. Verfahren zur Herstellung von Gemischen der 1 : 2-Metallkomplexfarbstoffe der Formeln I, II und III

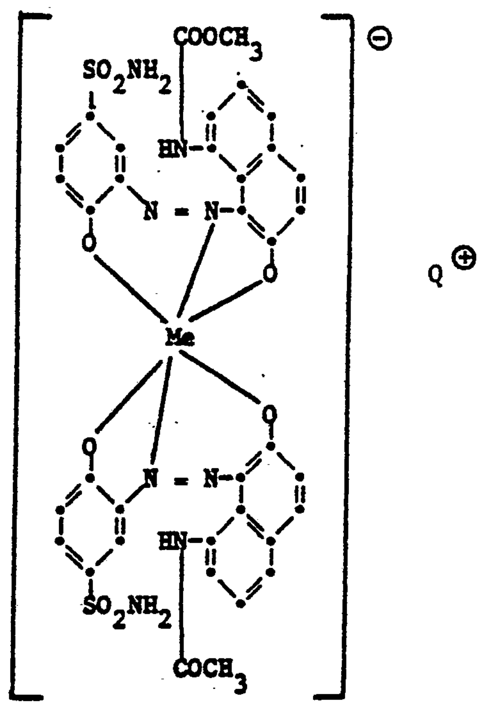

(I)

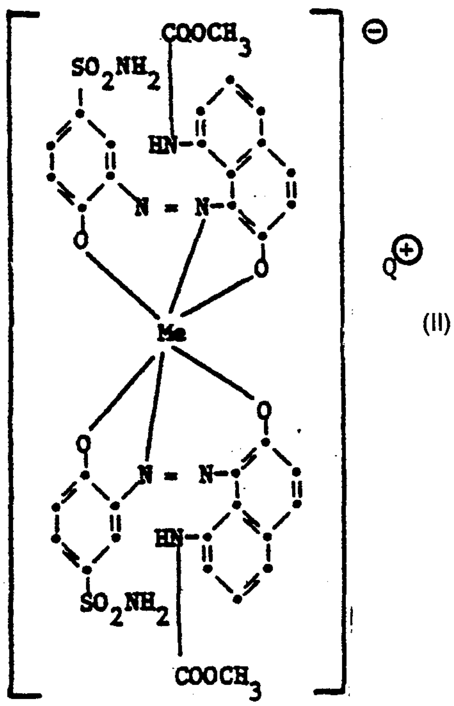

(II)

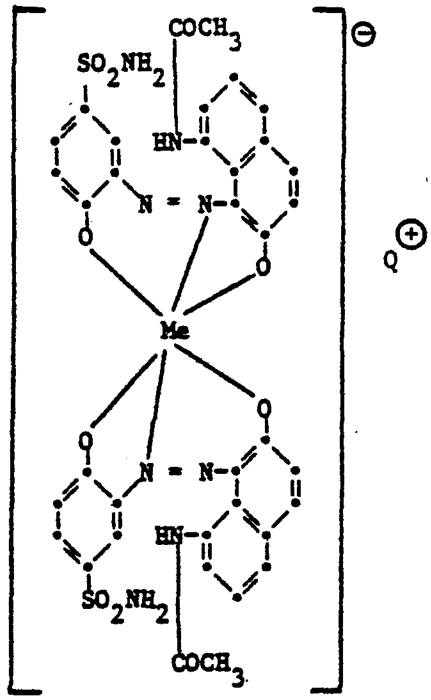

(III)

worin Me Chrom oder Kobalt und $Q^{\oplus}$ ein Kation bedeutet, dadurch gekennzeichnet, dass man ein Gemisch der Azofarbstoffe der Formeln IV und V

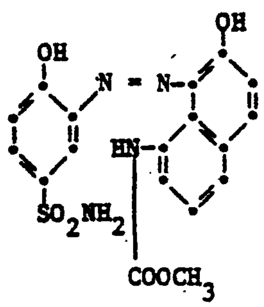

(IV)

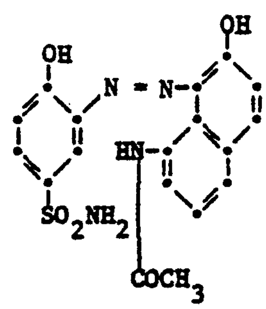

(V)

mit einem chrom- oder kobaltabgebenden Mittel umsetzt.

5. Verfahren gemäss Anspruch 4, dadurch gekennzeichnet, dass man ein Gemisch der Azofarbstoffe der Formeln IV und V im Mol-Verhältnis 35 : 65 bis 65 : 35, vorzugsweise 45 : 55 bis 55 : 45, mit einem chromoder kobaltabgebenden Mittel umsetzt.

6. Verfahren zur Herstellung der 1 : 2-Chromkomplexfarbstoffe der Formel VI

(Siehe die Formel VI, Seite 11)

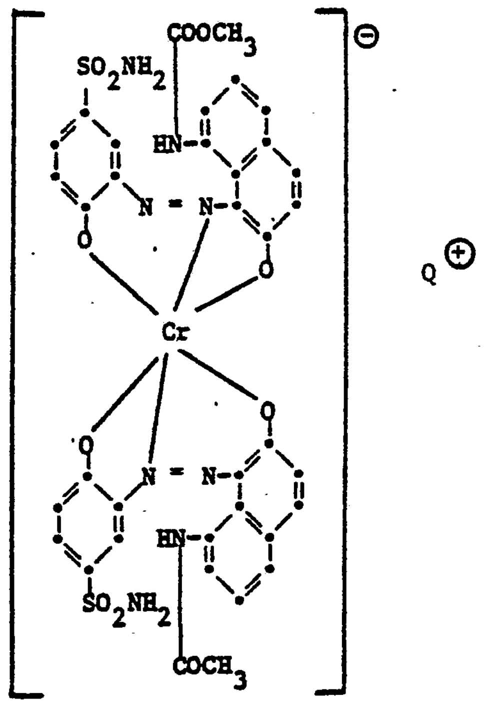

(VI)

worin Q$^{\oplus}$ ein Kation bedeutet, dadurch gekennzeichnet, dass man zuerts den 1 : 1-Chromkomplexfarbstoff des Farbstoffes der Formel IV

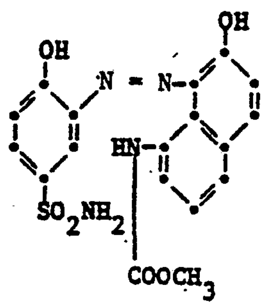

(IV)

oder den 1 : 1-Chromkomplexfarbstoff des Farbstoffs der Formel V

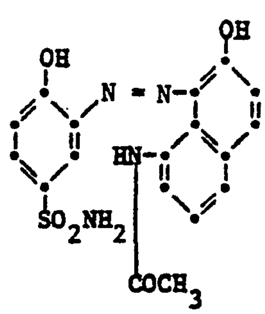

(V)

herstellt und diesen anschliessend mit dem Farbstoff der Formel V oder IV zum 1 : 2-Chromkomplexfarbstoff der Formel VI umsetzt.

7. Mischungen der 1 : 2-Metallkomplexfarbstoffe der Formeln I, II und III

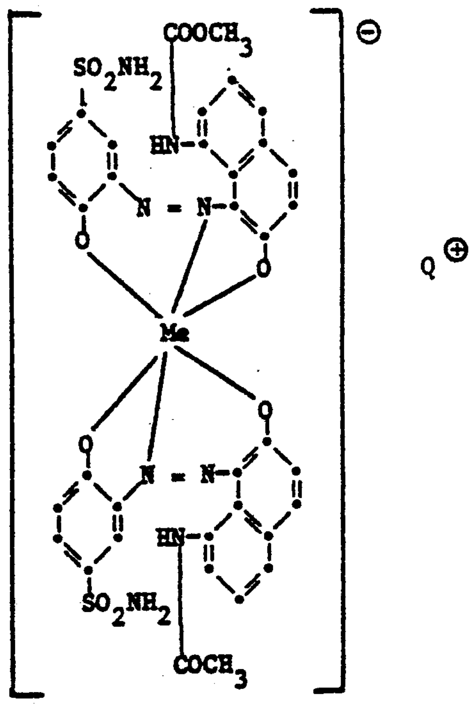

(I)

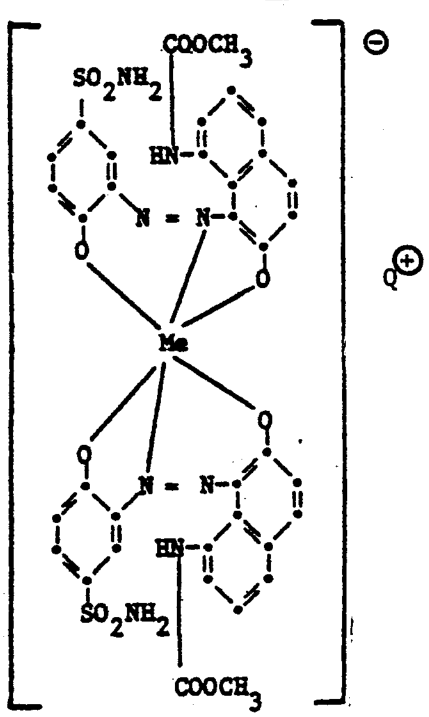

(II)

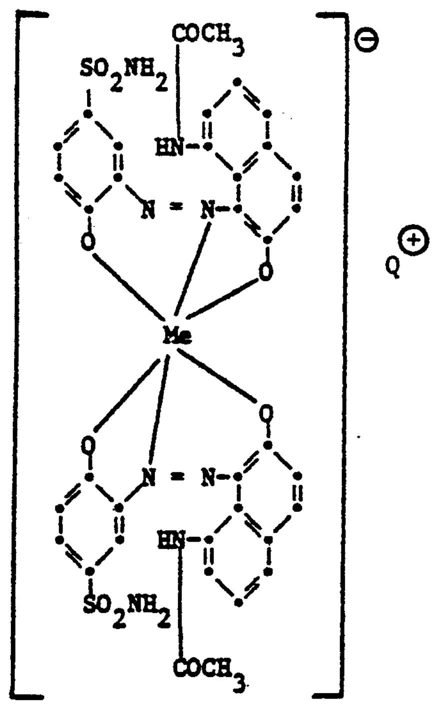

(III)

worin Me Chrom oder Kobalt und Q$^{\oplus}$ ein Kation bedeutet, erhältlich, indem man eine Mischung der Azofarbstoffe der Formeln IV und V

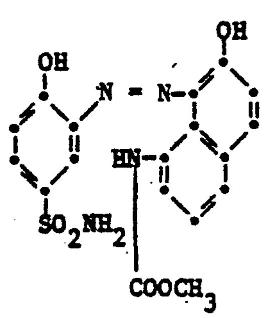

(IV)

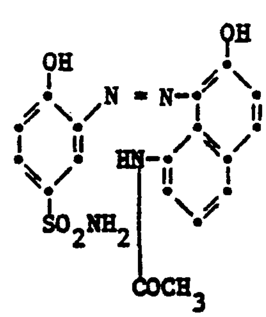

(V)

mit einem chrom- oder kobaltabgebenden Mittel umsetzt.

8. Mischungen gemäss Anspruch 7, erhältlich, indem man eine Suspension der Azofarbstoffe der Formeln IV und V

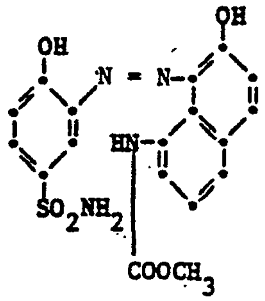

(IV)

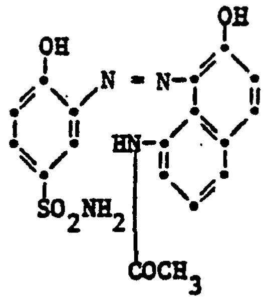

(V)

in Wasser, einem organischen Lösungsmittel oder einem Gemisch aus Wasser und einem organischen Lösungsmittel herstellt, ein chrom- oder kobaltabgebendes Mittel zusetzt, die Mischung bei einer Temperatur von 80 bis 100 °C verrührt und einen pH-Wert zwischen 6 und 9 einstellt, und anschliessend die Mischung der chrom- oder kobalthaltigen Farbstoffe aus der Reaktionslösung isoliert.

9. Farbstoffmischungen gemäss den Ansprüchen 7 oder 8, erhältlich, indem man ein Gemisch der Azofarbstoffe der Formeln IV und V im Molverhältnis 35 : 65 bis 65 : 35, vorzugsweise 45 : 55 bis 55 : 45, mit einem chrom- oder kobaltabgebenden Mittel umsetzt.

10. 1 : 2-Chromkomplexfarbstoffe der Formel VI

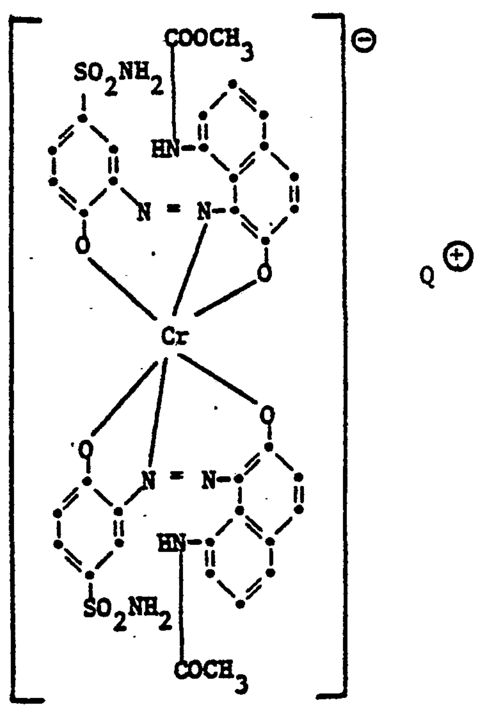

(VI)

worin $Q^{\oplus}$ ein Kation bedeutet, erhältlich, indem man den 1 : 1-Chromkomplexfarbstoff des Farbstoffes der Formel IV

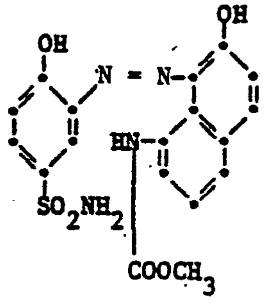

(IV)

oder den 1 : 1-Chromkomplexfarbstoff des Farbstoffs der Formel V

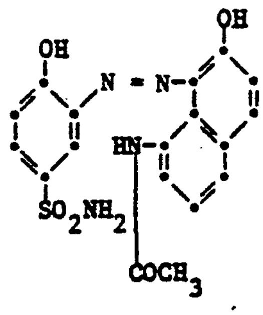

(V)

herstellt und diesen anschliessend in Wasser, einem organischen Lösungsmittel oder einem Gemisch aus Wasser und einem organischen Lösungsmittel suspendiert, den Farbstoff der Formel V oder IV zusetzt, die Mischung bei einer Temperatur zwischen 80 und 100 °C verrührt, einen pH-Wert zwischen 6 und 9 einstellt, und anschliessend den Farbstoff der Formel VI aus der Reaktionslösung isoliert.

11. Verwendung der Farbstoffe gemäss den Ansprüchen 1 und 2 zur Herstellung nicht gelierender Färbebäder, Klotzflotten oder Druckpasten.

12. Verfahren zum Färben oder Bedrucken von natürlichen oder synthetischen Polyamidmaterialien, dadurch gekennzeichnet, dass man Farbstoffe gemäss den Ansprüchen 1 bis 3 verwendet.

13. Das gemäss Anspruch 12 erhaltene, gefärbte oder bedruckte Material.

**Claims**

1. A 1 : 2 metal complex dye of the formula I

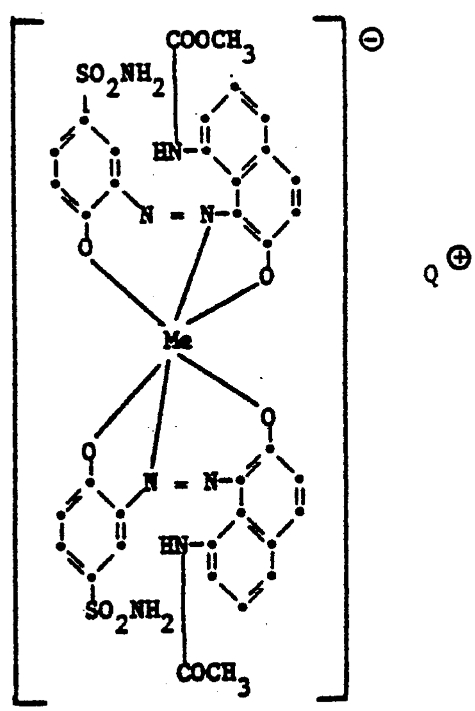

(I)

wherein Me is chromium or cobalt and $Q^{\oplus}$ is a cation, or a mixture thereof with the metal complex dyes of the formulae II and III

(See the formulae II and III, page 15)

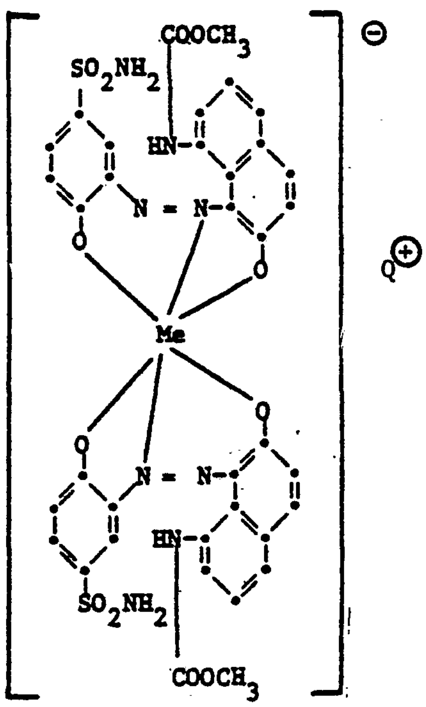

(II)

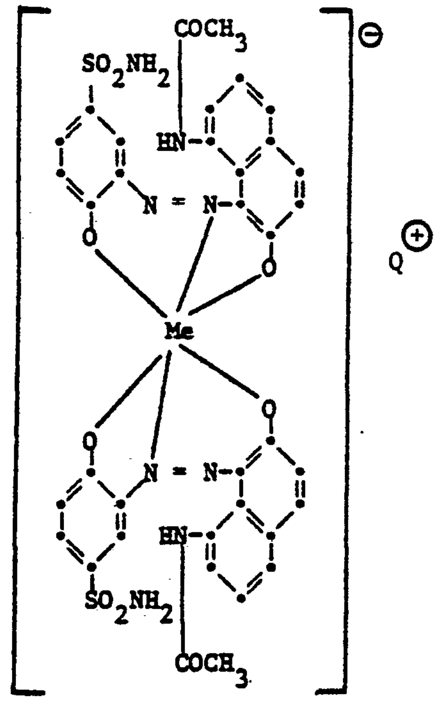

(III)

wherein Me and Q$^{\oplus}$ have the above meanings.

2. A metal complex dye of the formula I, or a mixture thereof with the metal complex dyes of the formulae II and III, wherein Me is chromium.

3. A 1 : 2 chromium complex dye of the formula VI

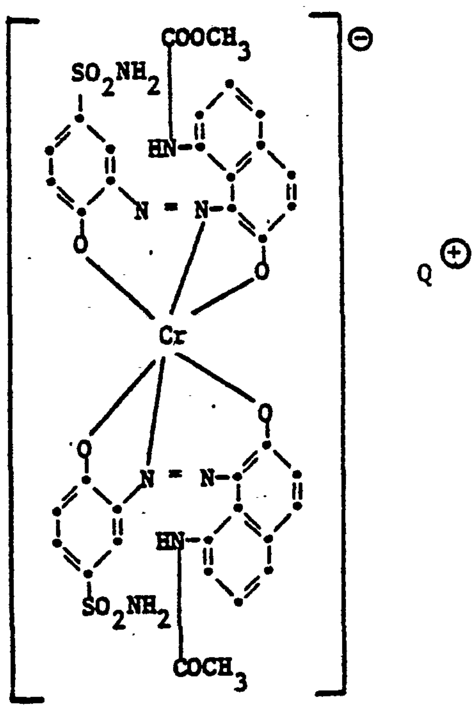

(VI)

wherein Q$^{\oplus}$ is a cation.

4. A process for the production of a mixture of the 1 : 2 metal complex dyes of the formulae I, II and III

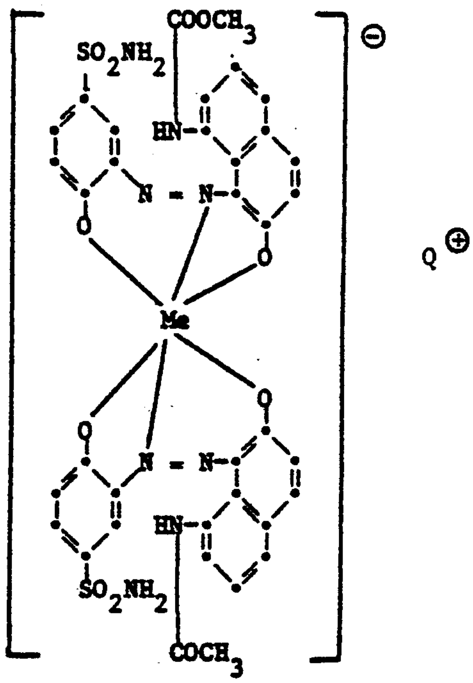

(I)

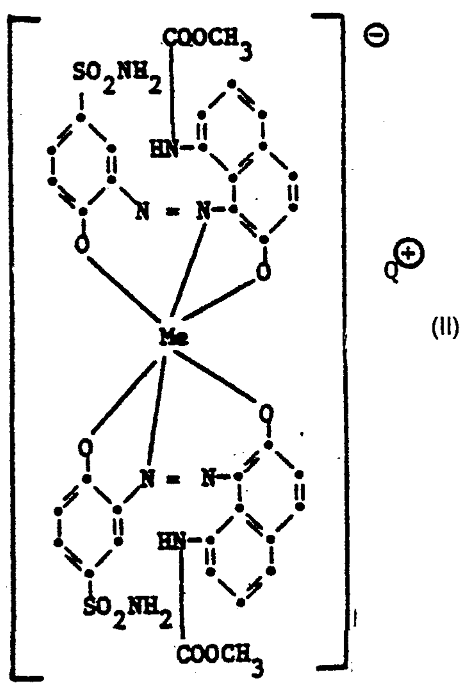

(II)

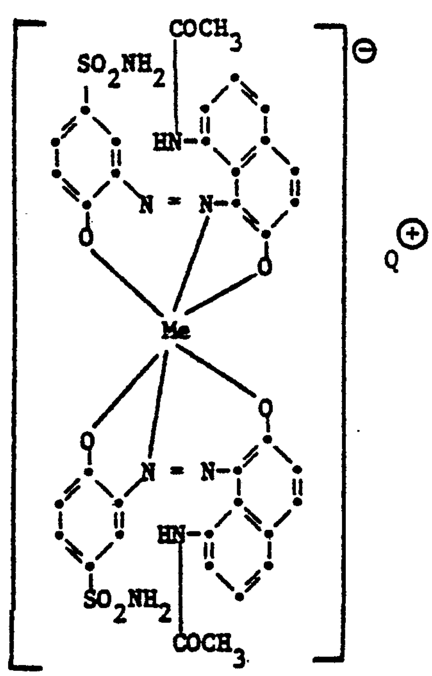

(III)

wherein Me is chromium or cobalt and $Q^{\oplus}$ is a cation, which process comprises reacting a mixture of the azo dyes of the formulae IV and V

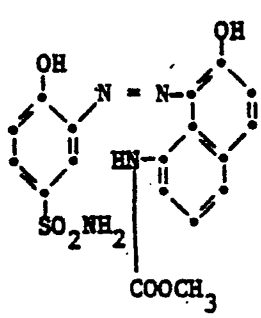

(IV)

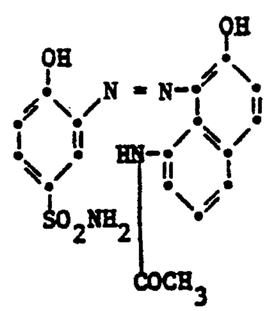

(V)

with a chromium or cobalt donor.

5. A process according to claim 4, which comprises reacting a mixture of the azo dyes of the formulae IV and V, in the molar ratio of 35 : 65 to 65 : 35, preferably 45 : 55 to 55 : 45, with a chromium or cobalt donor.

6. A process for the production of a 1 : 2 chromium complex dye of the formula VI

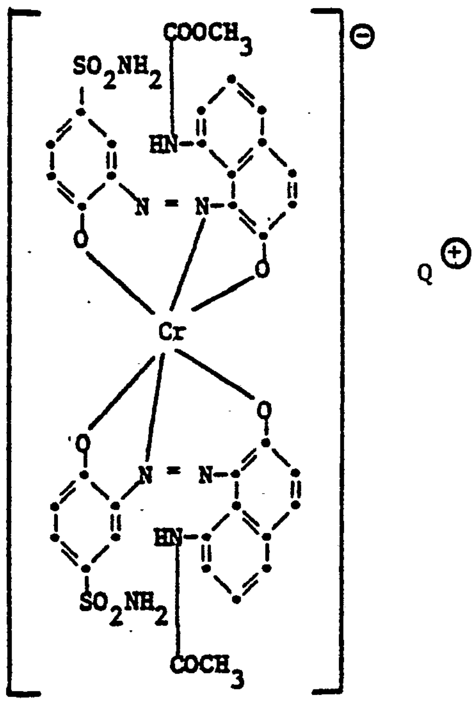

(VI)

wherein $Q^{\oplus}$ is a cation, which process comprises preparing first the 1 : 1 chromium complex of the dye of the formula IV

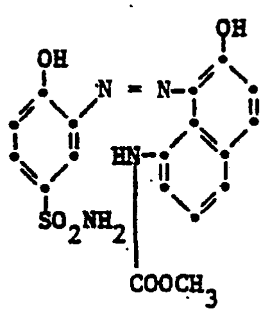

(IV)

or the 1:1 chromium complex of the dye of the formula V

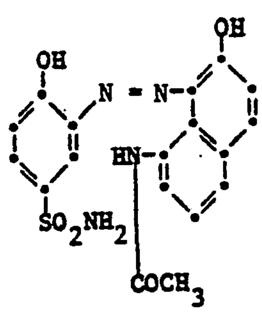

(V)

and subsequently reacting said complex with the dye of the formula V or IV to give the 1:2 chromium complex dye of the formula VI.

7. A mixture of the 1 : 2 metal complex dyes of the formulae I, II and III

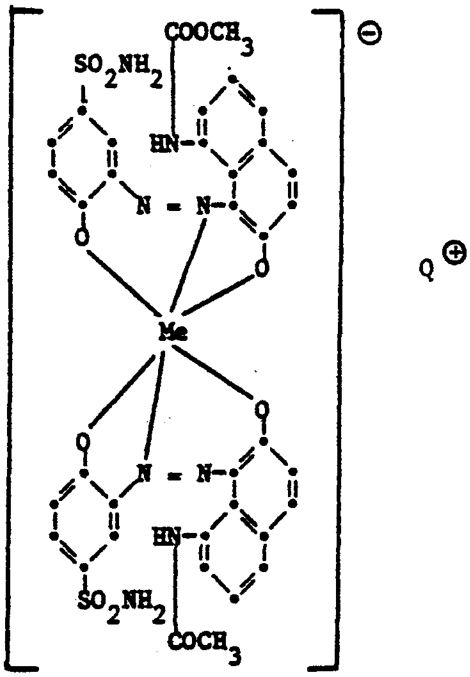

(I)

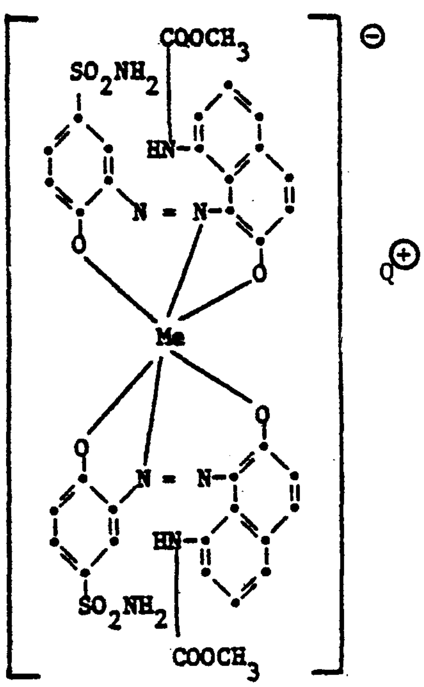

(II)

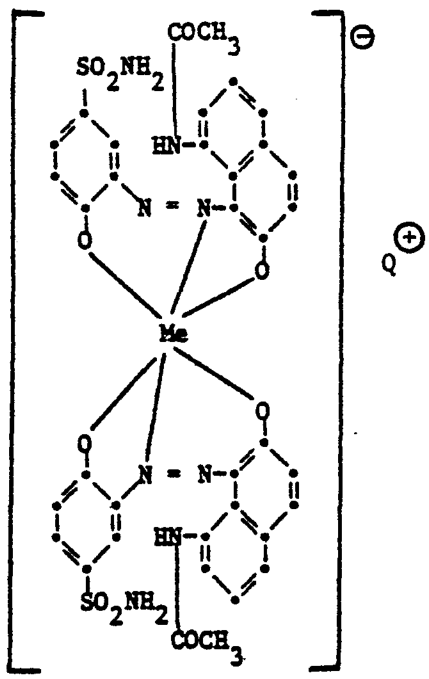

(III)

wherein Me is chromium or cobalt and Q$^{\oplus}$ is a cation, said mixture being obtainable by reacting a mixture of the azo dyes of the formulae IV and V

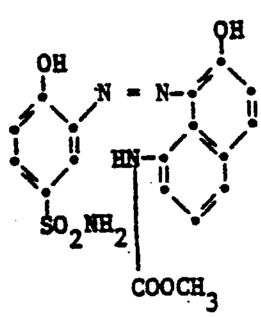

(IV)

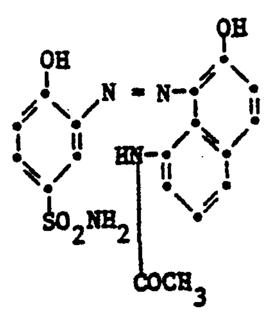

(V)

with a chromium or cobalt donor.

8. A mixture according to claim 7, said mixture being obtainable by preparing a suspension of the azo dyes of the formulae IV and V

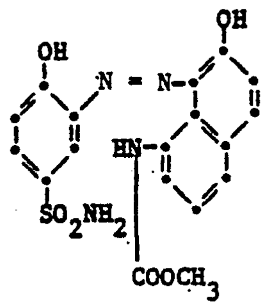

(IV)

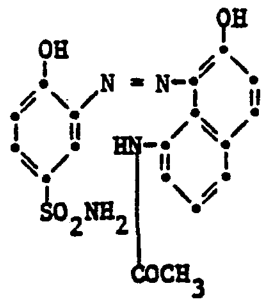

(V)

in water, an organic solvent or a mixture of water and an organic solvent, adding a chromium or cobalt donor, stirring the mixture in the temperature range from 80° to 100 °C, adjusting the pH to a value between 6 and 9, and subsequently isolating the mixture of the chromium or cobalt-containing dyes from the reaction solution.

9. A dyestuff mixture according to either of claims 7 or 8, said mixture being obtainable by reacting a mixture of the azo dyes of the formulae IV et V in the molar ratio of 35 : 65 to 65 : 35, preferably 45 : 55 to 55 : 45, with a chromium or cobalt donor.

10. A 1 : 2 chromium complex dye of the formula VI

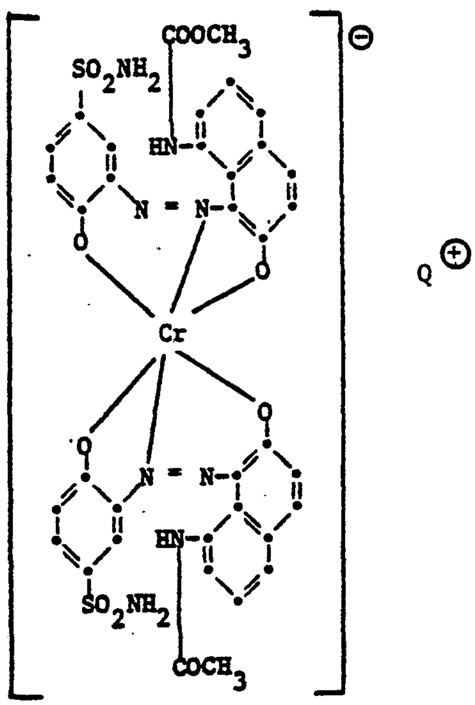

(VI)

wherein $Q^{\oplus}$ is a cation, said complex dye being obtainable by preparing the 1 : 1 chromium complex of the dye of the formula IV

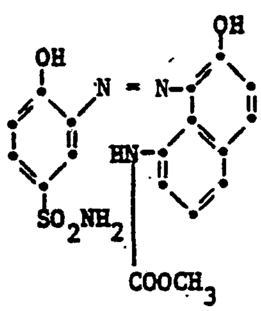

(IV)

or the 1 : 1 chromium complex of the dye of the formula V

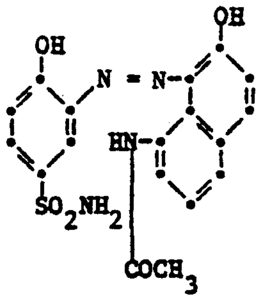

(V)

and then suspending said complex in water, an organic solvent or a mixture of water and an organic solvent, adding the dye of the formula V or IV, stirring the mixture in the temperature range from 80° to 100 °C, adjusting the pH to a value between 6 and 9, and subsequently isolating the dye of the formula VI from the reaction solution.

11. Use of a dye according to either of claims 1 or 2 for the preparation of non-gelling dye baths, paddings liquors or printing pastes.

12. A method of dyeing or printing natural or synthetic polyamide material, which comprises the use of a dye according to any one of claims 1 to 3.

13. The dyed or printed material obtained according to claim 12.

**Revendications**

1. Complexes métallifères 1 : 2 de colorants de formule I

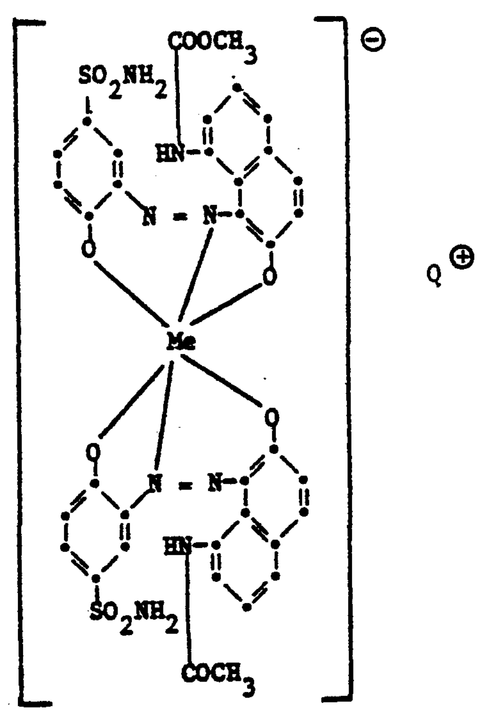

(I)

dans laquelle Me designe du chrome ou du cobalt, et $Q^{\oplus}$ désigne un cation, et leurs mélanges avec des complexes métallifères de colorants de formules II et III

(Voir formules II et III, page 21)

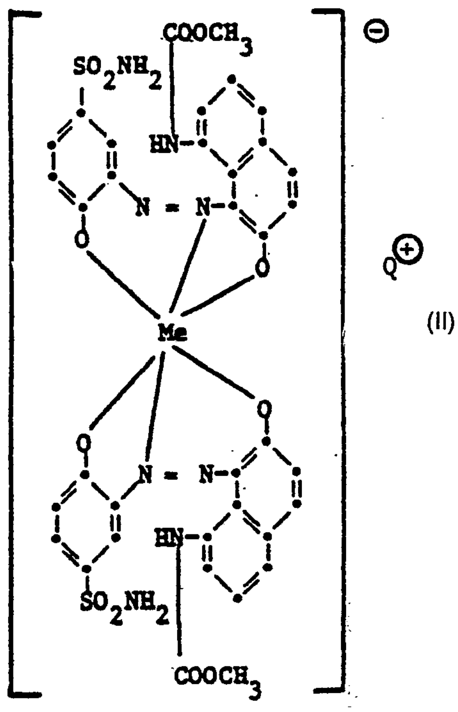

(II)

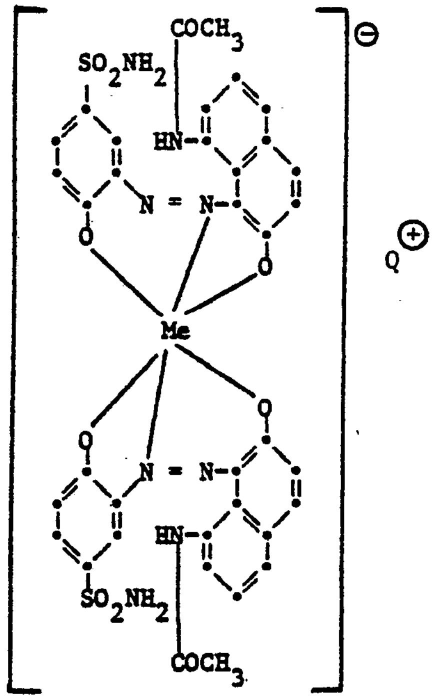

(III)

dans lesquelles Me et Q⊕ ont les significations données ci-dessus.

2. Complexes métallifères de colorants de formule I, ou leurs mélanges avec des complexes métallifères de colorants de formules II et III, dans lesquelles Me désigne du chrome.

3. Complexes chromifères 1 : 2 de colorants de formule VI

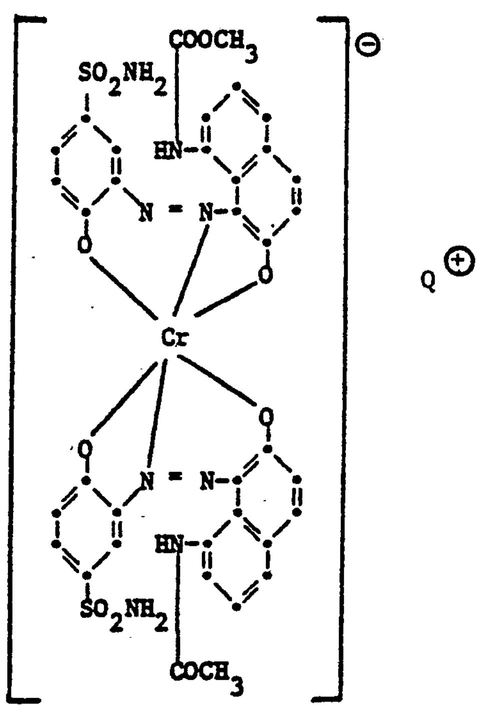

(VI)

dans laquelle Q⊕ désigne un cation.

4. Procédé pour la préparation de mélanges de complexes métallifères 1 : 2 de colorants de formules I, II et III :

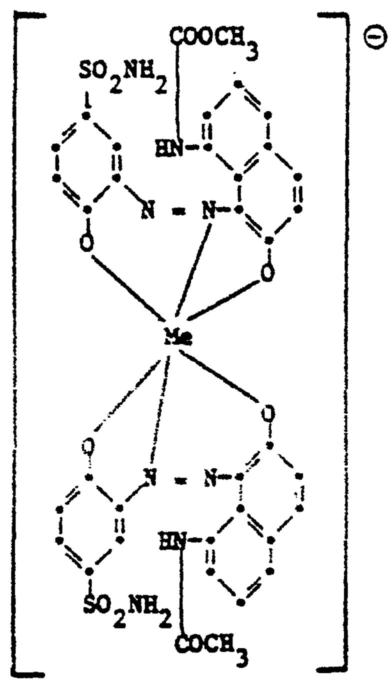

$Q^{\oplus}$

(I)

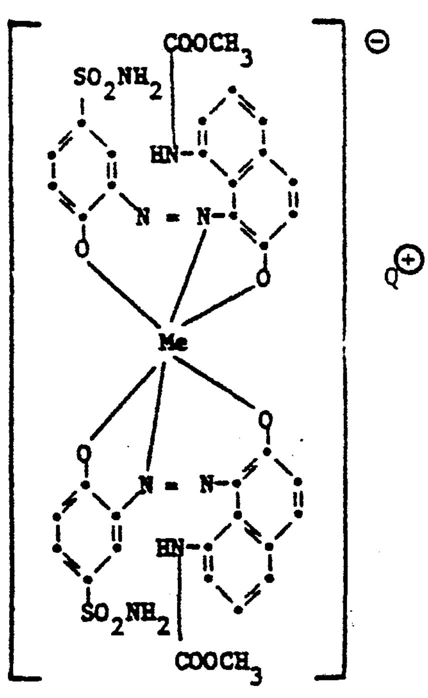

$Q^{\oplus}$

(II)

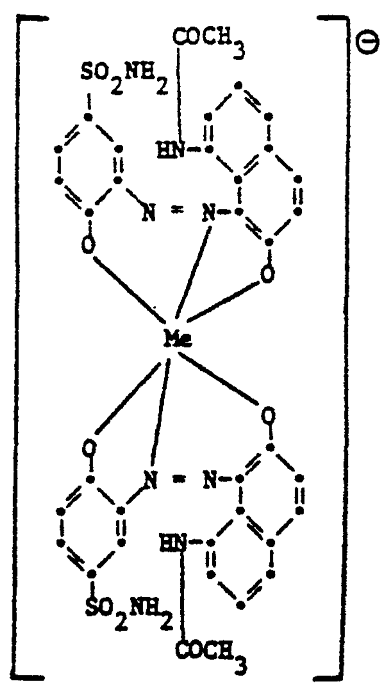

$Q^{\oplus}$

(III).

dans lesquelles Me désigne du chrome ou du cobalt et $Q^{\oplus}$ désigne un cation, caractérisé par le fait qu'on fait réagir un mélange de colorants azoïques de formules IV et V

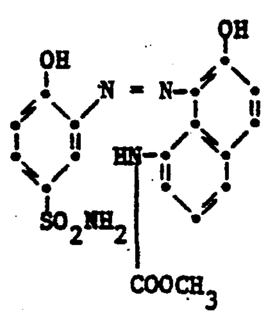

(IV)

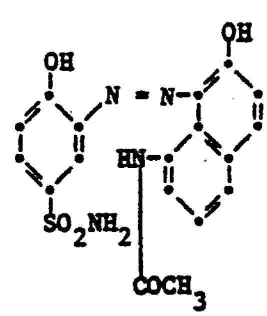

(V)

avec un composé donnant du chrome ou du cobalt.

5. Procédé selon la revendication 4, caractérisé par le fait qu'on fait réagir un mélange de colorants azoïques de formules IV et V dans un rapport molaire de 35 : 65 à 65 : 35, de préférence de 45 : 55 à 55 : 45, avec un composé donnant du chrome ou du cobalt.

6. Procédé pour la préparation de complexes chromifères 1 : 2 de colorants de formule VI

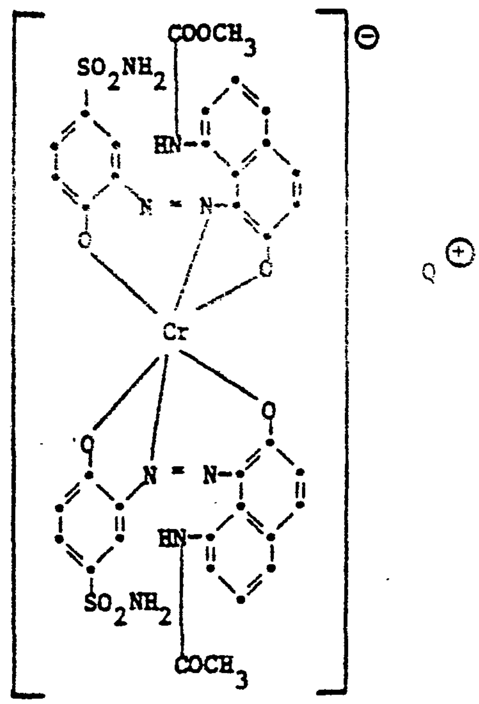

(VI)

dans laquelle $Q^{\oplus}$ désigne un cation, caractérisé par le fait qu'on prépare d'abord le complexe chromifère 1 : 1 du colorant de formule IV

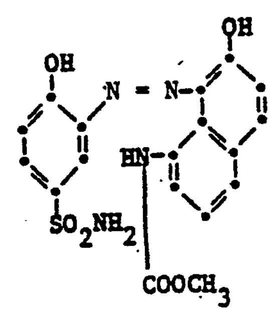

(IV)

ou le complexe chromifère 1 : 1 du colorant de formule V

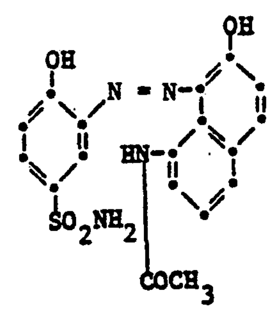

(V)

puisqu'on fait réagir ce complexe avec le colorant de formules V ou IV pour avoir le complexe chromifère 1 : 2 de colorant de formule VI.

7. Mélanges des complexes métallifères 1 : 2 de colorants de formules I, II et III

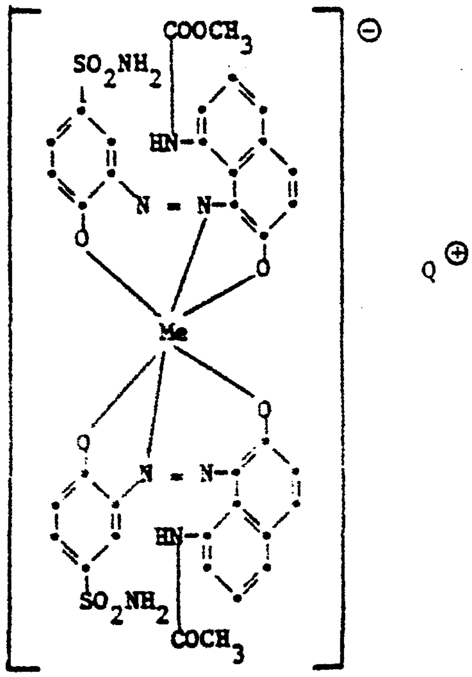

(I)

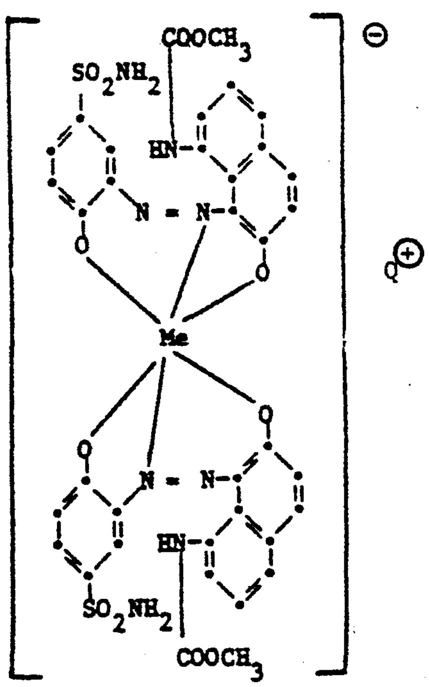

(II)

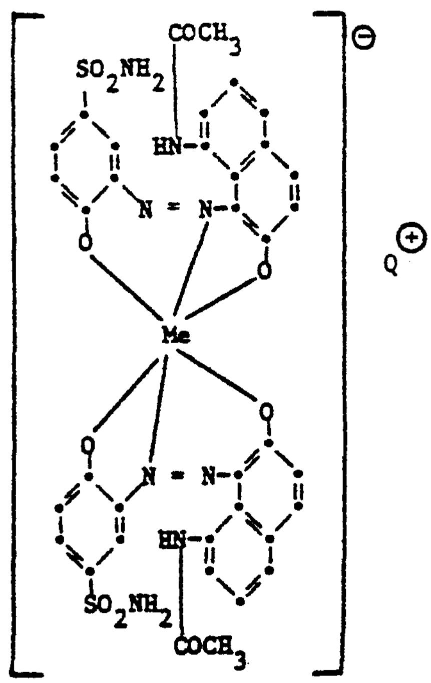

(III)

dans lesquelles Me désigne du chrome ou du cobalt et $Q^{\oplus}$ désigne un cation, obtenus en faisant réagir un mélange des colorants azoïques de formules IV et V

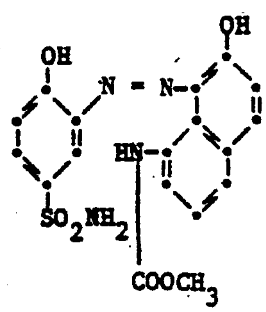

(IV)

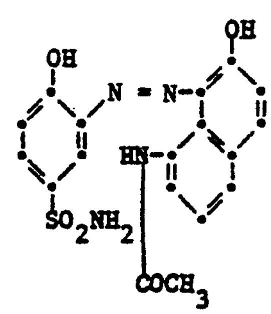

(V)

avec un composé donnant du chrome ou du cobalt.

8. Mélanges selon la revendication 7, obtenus en préparant une suspension des colorants azoïques de formules IV et V

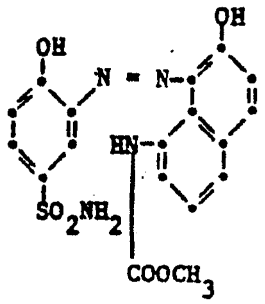
(IV)

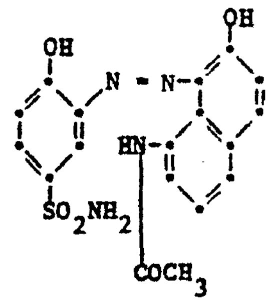
(V)

dans l'eau, un solvant organique ou un mélange d'eau et d'un solvant organique, en ajoutant un composé donnant du chrome ou du cobalt, en agitant le mélange à une température de 80 à 100 °C, puis en réglant le pH entre 6 et 9 et en isolant ensuite le mélange de colorants chromifères ou cobaltifères de la solution réactionnelle.

9. Mélanges de colorants selon les revendications 7 ou 8, obtenus en faisant réagir un mélange des colorants azoïques de formules IV et V dans un rapport molaire de 35 : 65 à 65 : 35, de préférence de 45 : 55 à 55 : 45, avec un composé donnant du chrome ou du cobalt.

10. Complexes chromifères 1 : 2 de colorants de formule VI

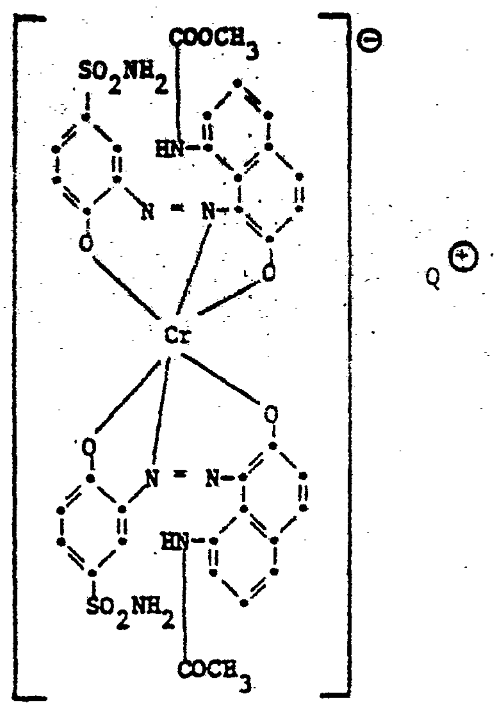
(VI)

dans laquelle $Q^{\oplus}$ désigne un cation, obtenus en préparant le complexe chromifère 1 : 1 du colorant de formule IV

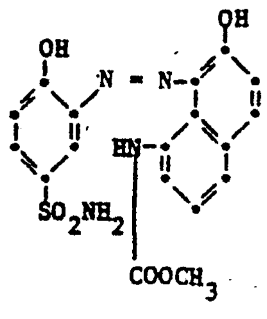
(IV)

ou le complexe chromifère 1 : 1 du colorant de formule V

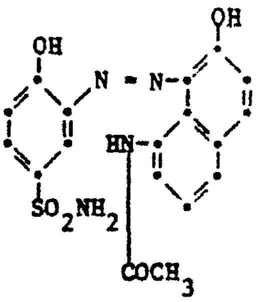

(V)

puis en mettant ce complexe en suspension dans l'eau, un solvant organique ou un mélange d'eau et d'un solvant organique, en ajoutant le colorant de formules V ou IV, en agitant le mélange à une température comprise entre 80 et 100 °C, en réglant le pH entre 6 et 9, puis en isolant le colorant de formule VI de la solution réactionnelle.

11. Utilisation des colorants selon les revendications 1 et 2, pour la préparation de bains de teinture, de bains de foulardage ou de pâtes d'impression, ne se gélifiant pas.

12. Procédé pour teindre ou imprimer des matières en polyamide naturel ou synthétique, caractérisé par le fait qu'on utilise des colorants selon les revendications 1 à 3.

13. La matière teinte ou imprimée obtenue selon la revendication 12.